## Europäisches Patentamt

## European Patent Office

## Office européen des brevets

(19)

(11) Veröffentlichungsnummer: **0 022 186**
**B1**

(12) **EUROPÄISCHE PATENTSCHRIFT**

(45) Veröffentlichungstag der Patentschrift:
27.10.82

(51) Int. Cl.³: **B 01 D 11/04, C 01 B 25/46**

(21) Anmeldenummer: **80103271.5**

(22) Anmeldetag: **12.06.80**

(54) **Vorrichtung zur Flüssig-Flüssig-Extraktion.**

(30) Priorität: **04.07.79 DE 2926959**

(43) Veröffentlichungstag der Anmeldung:
**14.01.81 Patentblatt 81/2**

(45) Bekanntmachung des Hinweises auf die Patenterteilung:
**27.10.82 Patentblatt 82/43**

(84) Benannte Vertragsstaaten:
**BE DE FR GB IT NL**

(56) Entgegenhaltungen:
**DE-B-1 135 425**
**US-A-2 754 179**
**US-A-2 755 302**
**US-A-3 275 565**
**US-A-3 362 791**

(73) Patentinhaber: **HOECHST AKTIENGESELLSCHAFT,**
**Postfach 80 03 20, D-6230 Frankfurt/Main 80 (DE)**

(72) Erfinder: **Gradl, Reinhard, Dr., Am Grünen Weg 6,**
**D-5030 Hürth (DE)**
Erfinder: **Schrödter, Klaus, Dr., Röntgenstrasse 23,**
**D-5000 Köln 39 (DE)**
Erfinder: **Ehlers, Klaus-Peter, Dr., Am Steinfeld 5,**
**D-5042 Erftstadt (DE)**

BUNDESDRUCKEREI BERLIN

## Vorrichtung zur Flüssig-Flüssig-Extraktion

Die vorliegende Erfindung betrifft eine Vorrichtung zur kontinuierlichen Flüssig-Flüssig-Extraktion vom Mischer-Abscheider-Typ, welche aus einem Trenngefäß und einem mit Rührer versehenen Mischgefäß besteht, wobei das Mischgefäß dichtschließend in den Boden des Trenngefäßes eingesetzt ist, mindestens teilweise in das Trenngefäß hineinragt sowie an seinem oberen Ende eine Überlaufkante aufweist, und wobei in das Mischgefäß Zuführungsleitungen für die schwere und für die leichte Phase einmünden, und wobei das Trenngefäß im unteren Bereich mit einem Ablaufrohr für die schwere Phase versehen sowie nahe seinem oberen Ende von einer Ablaufleitung für die leichte Phase durchdrungen ist.

Für die Flüssig-Flüssig-Extraktion werden Apparate vom Mischer-Abscheider-Typ verwendet, weil deren Stufenwirkungsgrad meist über 95% liegt und weil zur Erzielung höherer Extraktionsraten mehrere Apparate in Kasten- oder Turmbauweise als Batterie in Serie geschaltet werden können, wobei jede Stufe für sich einstellbar und optimierbar ist. So ist aus der DE-A-2 824 387 eine Vorrichtung zur Flüssig-Flüssig-Extraktion bekannt, welche aus einem Behälter besteht, dessen Seitenwandung ein Zylinder oder ein regelmäßiges Vieleck ist und dessen Boden die Form eines auf die Spitze gestellten Kegels oder einer Pyramide mit einer Neigung von 10 bis 40° gegenüber der Horizontalen hat. Der Behälter ist durch radiale Wände in Sektoren unterteilt, wobei jeder Sektor einen mit Rührer versehenen Mischer und einen Abscheider aufweist. Als Auslaß jedes Mischers zum Abscheider ist nahe der Seitenwandung des Behälters ein Überlaufwehr angeordnet. In den Sektoren sind Schikanen in Form von Leitwänden oder Rinnen vorgesehen, durch welche die aus den Mischern ausfließenden gemischten flüssigen Phasen aufgrund der Schwerkraft zu Zonen nahe der Behälterachse strömen.

Die Anlage zum Mischen und Trennen praktisch nicht ineinander löslicher Flüssigkeiten unterschiedlichen spezifischen Gewichtes nach der DE-B-1 135 425 besteht aus einem mit Rührer versehenen Mischgefäß, um welches ein Abscheider als Ringmantel angeordnet ist. Dabei weist das Mischgefäß an seinem oberen Ende eine Überlaufkante auf. In das Mischgefäß münden Zuführungsleitungen für die schwere und leichte Phase ein, während der Abscheider im unteren Bereich mit einem Ablaufrohr für die schwere Phase sowie im oberen Bereich mit einem Ablauf für die leichte Phase versehen ist.

Die Vorrichtung zum Inberührungbringen und Trennen zweier unmischbarer Flüssigkeiten nach der US-A-3 275 565 besteht aus einem zylindrischen Behälter mit unterem Auslaß für die schwere Phase und oberen Auslaß für die leichte Phase. Der Boden des Behälters ist weiterhin von einem Einlaßrohr, welches innerhalb des Behälters in einer Dispergiereinrichtung endet, durchdrungen. Der untere Auslaß des Behälters ist mit einem Rohr verbunden, welches innerhalb des Behälters in seinem mittleren Bereich endet, wobei am oberen Ende des Rohres mit Abstand ein Deflektor befestigt ist. Am Behälter ist etwa in seiner Mitte ein Grenzflächenüberwacher angeordnet, welcher Stellbefehle an ein automatisch betätigbares Ventil gibt, das sich in einem mit dem unteren Auslaß des Behälters strömungsmäßig verbundenen Auslaßrohr befindet.

Schließlich ist aus der US-A-2 755 302 eine Einrichtung zum Trennen einer Mischung von zwei nichtmischbaren Flüssigkeiten von unterschiedlichem spezifischem Gewicht in ihre Komponenten bekannt, welche aus einer Waschkammer und einer angrenzenden Trennkammer besteht. Dabei ist die Waschkammer mit einem unteren Einlaß für die Flüssigkeitsmischung versehen, während in der Waschkammer mehrere schräg gestellte Trennplatten übereinander angeordnet sind. Waschkammer und Trennkammer sind über eine mit Öffnungen versehene vertikale Wand miteinander verbunden. Die Trennkammer weist einen oberen Ablaß für die leichtere Phase auf, während die schwerere Phase aus der Trennkammer über einen Siphon abläuft, dessen Scheitelpunkt von einem Überlaufkasten gebildet wird.

Wenn es bei der Extraktion, insbesondere bei der Verwendung von mit Wasser nicht oder nur teilweise mischbaren Lösungsmitteln, zur Bildung wäßriger Raffinatphasen kommt, welche zähflüssig sind und/oder beträchtliche Mengen Feststoffe enthalten, so sind die bekannten Apparate vom Mischer-Abscheider-Typ wenig geeignet.

Dies ist beispielsweise der Fall bei der Reinigung von durch Säureaufschluß von Rohphosphat hergestellter Rohphosphorsäure durch Extraktion mit Lösungsmitteln wie Amylalkohol, wobei ein Gewichtsverhältnis von Lösungsmittel zu Säure zwischen 2,5 : 1 und 24 : 1 eingehalten wird (vgl. DE-B-2 321 751). Das bedeutet aber, daß der Anteil an schwerer Phase im Mischbereich nur zwischen 4 und 28% beträgt, so daß sich in den bekannten Apparaten vom Mischer-Abscheider-Typ stets die Lösungsmittelphase als die kontinuierliche Phase einstellt, in welcher die schwere Phase dispergiert ist.

Es wurde gefunden, daß Extraktionen mit organischen Lösungsmitteln, beispielsweise die Reinigung von durch Säureaufschluß von Rohphosphat hergestellter Rohphosphorsäure, wesentlich wirkungsvoller durchgeführt werden können, wenn die schwere Phase kontinuierlich geführt und das Lösungsmittel darin dispergiert wird.

Es ist daher Aufgabe der vorliegenden Erfindung, eine Vorrichtung zur Flüssig-Flüssig-Extraktion mit großem Verhältnis von leichter Phase zu schwerer Phase bereitzustellen, in welcher zähflüssige und hohe Feststoffmengen enthaltende Raffinatphasen problemlos verarbeitet werden können und in welcher die Einstellung der schweren Phase als kontinuierliche Phase, in der das Lösungsmittel dispergiert wird, von selbst erfolgt. Das wird erfindungsgemäß dadurch erreicht, daß bei einer aus einem Trenngefäß und aus einem mit Rührer versehenen Mischgefäß bestehenden Vorrichtung der Boden des Trenngefäßes schräg angeordnet ist; daß das Ablaufrohr für die schwere Phase in den schrägen Boden des Trenngefäßes nahe seiner tiefsten Stelle eingesetzt ist; daß im Trenngefäß eine Standmeßeinrichtung LI zur Ermittlung der Phasengrenzfläche angeordnet ist; und daß die Standmeßeinrichtung LI mit einer Regeleinrichtung verbunden ist, welche Stellbefehle an ein Organ gibt, mit dessen Hilfe die Phasengrenzfläche im Trenngefäß deutlich oberhalb der den Eintritt der Mischung in das Trenngefäß darstellenden Überlaufkante des Mischgefäßes einregelbar ist.

Die Vorrichtung gemäß der Erfindung kann weiterhin wahlweise auch noch dadurch ausgestaltet sein, daß

a)  das Organ ein automatisch betätigbares Ventil ist, welches im Ablaufrohr angeordnet ist;
b)  das Organ eine bezüglich ihrer Fördermenge je Zeiteinheit regelbare Pumpe ist, deren Saugseite mit dem Ablaufrohr strömungsmäßig verbunden ist;
c)  das Organ ein Siphon ist, dessen Scheitelpunkt zwischen der Phasengrenzfläche und der Ablaufleitung automatisch verstellbar ist.

Bei der erfindungsgemäßen Vorrichtung kann das Mischgefäß mit Stromstörern ausgerüstet sein, während die Schräge des Bodens des Trenngefäßes vorteilhafterweise zwischen 10 und 60° beträgt, wobei der Boden auch die Form eines verzogenen Kegels haben kann.

Bei der Vorrichtung gemäß der Erfindung erfolgt der Übertritt der Mischung aus leichter und schwerer Phase vom Mischgefäß in das Trenngefäß auf großer Fläche in freiem Fall über die Oberkante des Mischgefäßes, wodurch Verkrustungen oder Feststoffanfall vermieden werden.

Beim Betrieb der erfindungsgemäßen Vorrichtung strömt im Trenngefäß die schwere Phase nach unten, wobei eventuell anfallender Feststoff auf dem schrägen Boden auf das Ablaufrohr zurutscht und zusammen mit der schweren Phase über das Organ ausgeschleust wird, während die dispergierte leichte Phase nach oben steigt und nach Koaleszent an der Phasengrenzfläche eine homogen organische Phase bildet, welche das Trenngefäß über die obere Ablaufleitung verläßt.

Bei der Vorrichtung gemäß der Erfindung mit einem automatisch betätigbaren Ventil als Organ gibt die Regeleinrichtung bei steigender Phasengrenzfläche vorteilhafterweise getaktete Stellbefehle an das automatisch betätigbare Ventil, wodurch Verstopfungen im Ablaufrohr und im Ventil durch die in der Raffinat-Phase enthaltenen Feststoffe entgegengewirkt wird.

In der beigefügten Zeichnung sind Ausführungsbeispiele des Gegenstandes der Erfindung schematisch als Seitenansicht im Schnitt dargestellt. Dabei zeigt

Fig. 1 eine Vorrichtung mit einem automatisch betätigbaren Ventil als Organ,

Fig. 2 eine Vorrichtung mit einem verstellbaren Siphon als Organ.

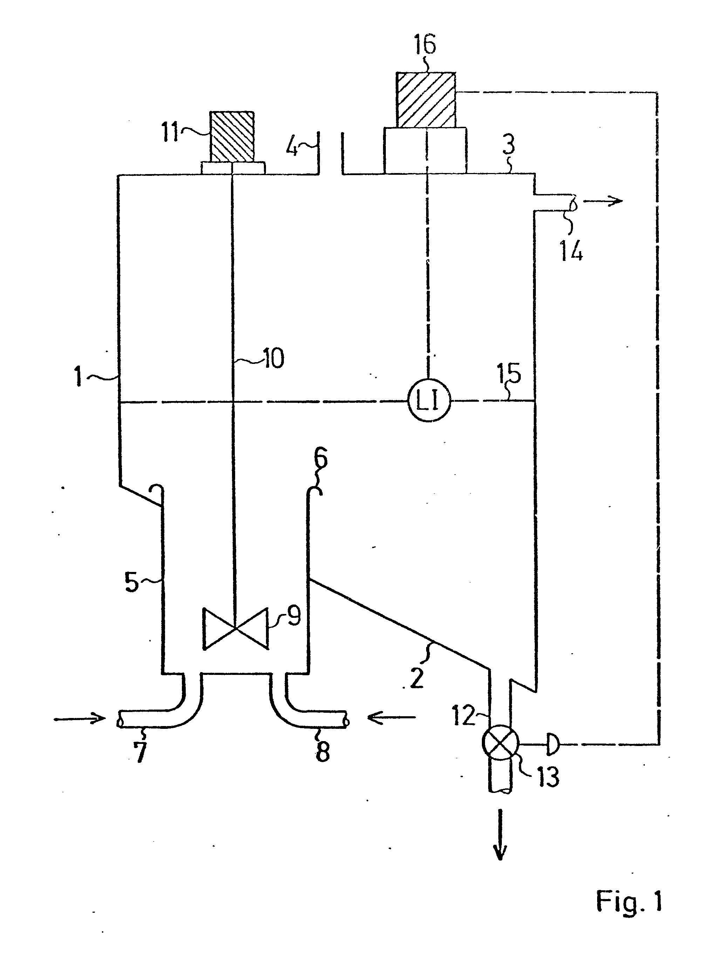

Ein Trenngefäß 1 weist einen schrägen Boden 2 auf und ist mit einem mit einem Abluftrohr 4 versehenen Deckel 3 verschlossen. Der schräge Boden 2 weist eine Öffnung auf, in welche ein Mischgefäß 5 mit Überlaufkante 6 dichtschließend derartig eingesetzt ist, daß es teilweise in das Trenngefäß 1 hineinragt. In das Mischgefäß 5 münden Zuführungsleitungen 7, 8 für die schwere und die leichte flüssige Phase ein. Im Mischgefäß 5 ist ein Rührer 9 angeordnet, welcher über eine Rührwelle 10 von einem sich auf dem Deckel 3 abstützenden Motor 11 angetrieben wird. Der schräge Boden 2 des Trenngefäßes 1 ist nahe seiner tiefsten Stelle von einem Ablaufrohr 12 für die schwere Phase durchdrungen. Das Trenngefäß 1 ist nahe seinem oberen Ende von einer Ablaufleitung 14 für die leichte Phase durchdrungen. Im Inneren des Trenngefäßes 1 ist eine Standmeßeinrichtung LI in einer solchen Höhe angeordnet, daß die Phasengrenzfläche 15 deutlich oberhalb der Überlaufkante 6 des Mischgefäßes 5 verläuft. Die Standmeßeinrichtung LI ist mit einer Regeleinrichtung 16 verbunden. Nach Fig. 1 ist am Ablaufrohr 12 als Organ ein automatisch betätigbares Ventil 13 angebracht, welches Stellbefehle von der Regeleinrichtung 16 erhält.

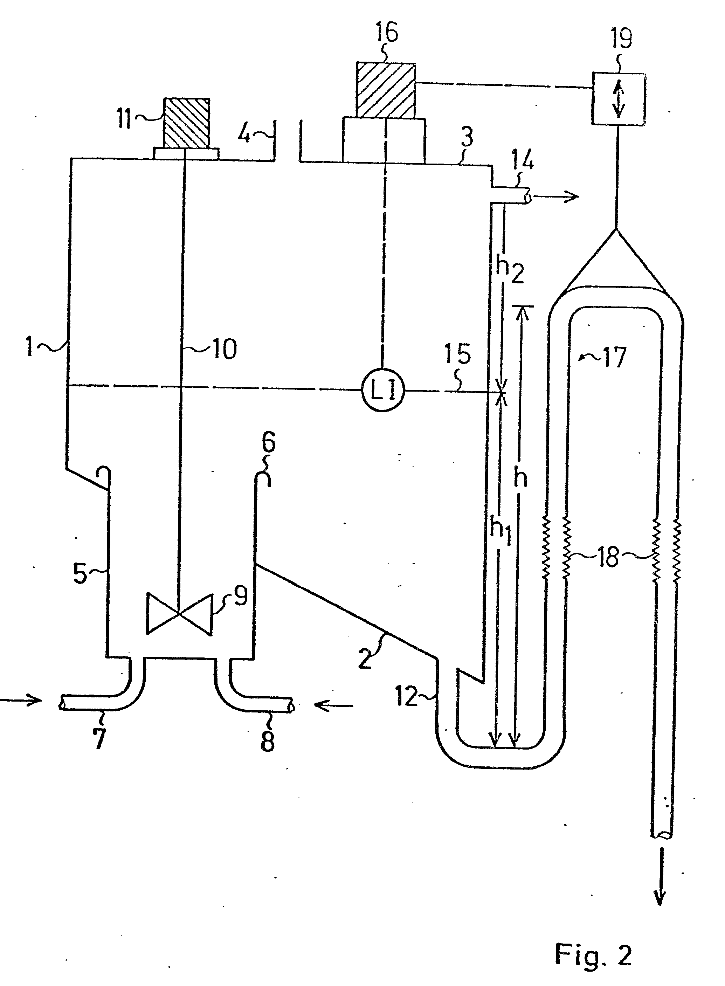

Nach Fig. 2 ist am Ablaufrohr 12 als Organ ein Siphon 17 angebracht, in dessen Längsschenkeln Faltenbälge 18 angeordnet sind. Der Siphon 17 ist an einer Hubeinrichtung 19 aufgehängt, durch welche der Scheitelpunkt des Siphons 17 veränderbar ist. Die Hubeinrichtung 19 erhält Stellbefehle von der Regeleinrichtung 16. Dabei ergibt sich die Höhe h des Siphons 17 aus der Gleichung

$$h \cdot \varrho_1 = h_1 \cdot \varrho_1 + h_2 \cdot \varrho_2$$

wobei $h_1$ der Abstand vom tiefsten Punkt des Siphons 17 bis zur Phasengrenzfläche 15, $h_2$ der Abstand zwischen der Phasengrenzfläche 15 und der Ablaufleitung 14, $\varrho_1$ die Dichte der schweren Phase und $\varrho_2$ die Dichte der leichten Phase bedeuten.

Zur Erhöhung der Extraktionsrate können mehrere der erfindungsgemäßen Vorrichtungen zu einer mehrstufigen Batterie zusammengeschlossen werden.

Zur Inbetriebnahme der Vorrichtung gemäß der Erfindung wird zunächst schwere Phase im Mischgefäß und im unteren Teil des Trenngefäßes vorgelegt. Dann werden leichte Phase und schwere Phase, im Falle einer n-stufigen Batterie schwere Phase aus der (n−1)-ten Stufe sowie leichte Phase aus der (n+1)-ten Stufe, über die entsprechenden Zuführungsleitungen im erforderlichen Mengenverhältnis gleichzeitig und kontinuierlich in das Mischgefäß gefördert und mit Hilfe des Rührers innig vermischt. Die Mischung tritt über die Oberkante des Mischgefäßes in das Trenngefäß ein. Durch die Lage der Phasengrenzfläche erheblich oberhalb der Oberkante des Mischgefäßes gelangt die Mischung in einen großen Überschuß von schwerer Phase, so daß sichergestellt ist, daß die wäßrige Phase die kontinuierliche Phase ist, in welcher die leichte Phase dispergiert ist.

Die erfindungsgemäße Vorrichtung ist insbesondere geeignet zur Reinigung von durch Naßaufschluß von Rohphosphat mit Mineralsäuren gewonnener Rohphosphorsäure mit beispielsweise Amylalkohol aus der Oxosynthese als leichter Phase sowie zur Extraktion des Urans aus Phosphorsäure mit beispielsweise einer Mischung von Di-octyl-pyrophosphorsäure und Tributylphosphat in Kerosin als leichter Phase.

## Patentansprüche

1. Vorrichtung zur kontinuierlichen Flüssig-Flüssig-Extraktion vom Mischer-Abscheider-Typ, bestehend aus einem Trenngefäß (1) und einem mit Rührer (9) versehenen Mischgefäß (5), wobei das Mischgefäß (5) dichtschließend in den Boden (2) des Trenngefäßes (1) eingesetzt ist, mindestens teilweise in das Trenngefäß (1) hineinragt sowie an seinem oberen Ende eine Überlaufkante (6) aufweist, und wobei in das Mischgefäß (5) Zuführungsleitungen (7, 8) für die schwere und für die leichte Phase einmünden, und wobei das Trenngefäß (1) im unteren Bereich mit einem Ablaufrohr (12) für die schwere Phase versehen sowie nahe seinem oberen Ende von einer Ablaufleitung (14) für die leichte Phase durchdrungen ist, dadurch gekennzeichnet, daß der Boden (2) des Trenngefäßes (1) schräg angeordnet ist; daß das Ablaufrohr (12) für die schwere Phase in den schrägen Boden (2) des Trenngefäßes`(1) nahe seiner tiefsten Stelle eingesetzt ist; daß im Trenngefäß (1) eine Standmeßeinrichtung LI zur Ermittlung der Phasengrenzfläche (15) angeordnet ist; und daß die Standmeßeinrichtung LI mit einer Regeleinrichtung (16) verbunden ist, welche Stellbefehle an ein Organ gibt, mit dessen Hilfe die Phasengrenzfläche (15) im Trenngefäß (1) deutlich oberhalb der den Eintritt der Mischung in das Trenngefäß (1) darstellenden Überlaufkante (6) des Mischgefäßes (5) einregelbar ist.

2. Vorrichtung nach Anspruch 1, dadurch gekennzeichnet, daß das Organ ein automatisch betätigbares Ventil (13) ist, welches im Ablaufrohr (12) angeordnet ist.

3. Vorrichtung nach Anspruch 1, dadurch gekennzeichnet, daß das Organ eine bezüglich ihrer Fördermenge je Zeiteinheit regelbare Pumpe ist, deren Saugseite mit dem Ablaufrohr (12) strömungsmäßig verbunden ist.

4. Vorrichtung nach Anspruch 1, dadurch gekennzeichnet, daß das Organ ein Siphon (17) ist, dessen Scheitelpunkt zwischen der Phasengrenzfläche (15) und der Ablaufleitung (14) automatisch verstellbar ist.

## Claims

1. Mixer/settler-type apparatus for continuous liquid-liquid extraction formed of a separating vessel (1) and mixing vessel (5) provided with an agitator (9), the mixing vessel (5) being tightly mounted in the bottom (2) of the separating vessel (1), opening partially into the separating vessel (1) and being provided at its upper end with an overflow edge (6); feed pipes (7, 8) admitting dense phase and light phase, respectively, being arranged so as to open into the mixing vessel (5) and the separating vessel (1) having a tubular dense phase outlet (12) passed through its lower end and having a light phase outlet (14) passed through it, near its upper end, characterized in that the bottom (2) of the separating vessel (1) is arranged in inclined position; that the tubular dense phase outlet (12) is mounted in the inclined bottom (2) of the separating vessel (1) at the lowermost level thereof; that a level indicator LI for investigating the phase boundary surface area (15) is mounted inside the separating vessel (1), said level indicator LI being connected to a control means (16) giving adjustment instructions to a structural element which permits the phase boundary suface area (15) inside the separating vessel (1) to be regulated so as to lie distinctly above the overflow edge (6) of the mixing vessel (5) through which (6) the mixture is admitted to the separating vessel (1).

2. Apparatus as claimed in claim 1, wherein the structural element is an automatically actuated valve (13) disposed inside the outlet (12).

3. Apparatus as claimed in claim 1, wherein the structural element is a pump, of which the conveying capacity per unit time is variable and of which the inlet side is connected, in the direction of flow, to the tubular outlet (12).

4. Apparatus as claimed in claim 1, wherein the structural element is a siphon (17) of which the vertex is automatically variable between the phase boundary surface area (15) and outlet (14).

## Revendications

1. Appareil du type mélangeur/séparateur pour l'extraction continue liquide-liquide, constitué d'une cuve de séparation (1) et d'une cuve de mélange (5) munie d'un agitateur (9), dans lequel la cuve de mélange (5) est montée de façon étanche sur le fond (2) de la cuve de séparation (1), s'ouvre au moins partiellement dans la cuve de séparation (1) et est munie, à son extrémité supérieure, d'un bord-déversoir (6), dans lequel des conduites d'admission (7, 8) pour la phase dense et la phase légère débouchent dans la cuve de mélange (5) et dans lequel la cuve de séparation (1) est munie, à sa partie inférieure, d'une tubulure de sortie (12) de la phase dense et, au voisinage de son extrémité supérieure, d'une conduite de sortie (14) de la phase légère, caractérisé en ce que le fond (2) de la cuve de séparation (1) est incliné, en ce que la tubulure de sortie (12) de la phase dense est montée dans le fond incliné (2) de la cuve de séparation (1) au voisinage de son point le plus bas; en ce qu'un indicateur de niveau LI pour déterminer l'interface de séparation des phases (15) est monté à l'intérieur de la cuve de séparation (1), en ce que l'indicateur de niveau LI est relié à un régulateur (16) donnant des ordres de réglage à un organe permettant d'établir l'interface de séparation des phases (15) dans la cuve de séparation (1) nettement au-dessus du bord-déversoir (6) de la cuve de mélange (5) qui constitue l'entrée du mélange dans la cuve de séparation (1).

2. Appareil selon la revendication 1, caractérisé en ce que l'organe est une soupape (13) à commande automatique placée à l'intérieur de la tubulure de sortie (12).

3. Appareil selon la revendication 1, caractérisé en ce que l'organe est une pompe dont le débit est réglable et dont le côté entrée est relié, dans le sens de l'écoulement, à la tubulure de sortie (12).

4. Appareil selon la revendication 1, caractérisé en ce que l'organe est un siphon (17) dont le sommet est réglable automatiquement entre l'interface de séparation des phases (15) et la conduite de sortie (14).

Fig. 1

Fig. 2